(19)

Europäisches
Patentamt
European
Patent Office
Office européen
des brevets

(11) **EP 2 430 471 B1**

(12) **EUROPEAN PATENT SPECIFICATION**

(45) Date of publication and mention
of the grant of the patent:
**27.07.2016 Bulletin 2016/30**

(21) Application number: **09779451.5**

(22) Date of filing: **12.05.2009**

(51) Int Cl.:
*G01S 7/12* *(2006.01)*  *G01S 7/22* *(2006.01)*
*G01S 7/298* *(2006.01)*  *G01S 13/93* *(2006.01)*

(86) International application number:
**PCT/EP2009/055721**

(87) International publication number:
**WO 2010/130285 (18.11.2010 Gazette 2010/46)**

(54) **AUGMENTING RADAR CONTACT SIZE ON A RADAR PLAN POSITION INDICATOR (PPI) DISPLAY**

ERGÄNZEN DER RADARKONTAKTGRÖSSE AUF EINER ANZEIGE DES RADAR-PLANPOSITIONSINDIKATORS (PPI)

AUGMENTATION DE LA TAILLE DU CONTACT RADAR SUR UN ÉCRAN RADAR PANORAMIQUE (PPI)

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**21.03.2012 Bulletin 2012/12**

(73) Proprietor: **Raytheon Anschütz GmbH 24106 Kiel (DE)**

(72) Inventor: **REITER, Carsten 24211 Preetz (DE)**

(74) Representative: **Eisenführ Speiser Patentanwälte Rechtsanwälte PartGmbB Johannes-Brahms-Platz 1 20355 Hamburg (DE)**

(56) References cited:
**GB-A- 2 423 657   JP-A- 9 021 865
JP-A- 61 231 474   JP-A- 2003 028 950**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

This invention relates generally to radar systems and more particularly to augmenting radar contact size on a radar plan position indicator (PPI) display.

BACKGROUND

Shipboard navigation radars assist navigators of ships in avoiding collisions by allowing the navigators to locate land and objects (e.g., ships, buoys) beyond what can been seen from the ship itself. In early shipboard navigation radars, analog circuits were used to generate a two-dimensional image (e.g., a PPI) on a cathode ray tube (CRT) display. These analog circuits formed the image by driving the rotation of the cathode ray around the CRT in synch with the rotation of the radar antenna, by re-centering the cathode ray with each trigger of the radar transmitter (or transceiver), and by timing the sweep of the cathode ray with the radar echoes processed by the radar receiver (or transceiver). This sort of image was swept out in real time, using the persistence of phosphors in the CRT to hold the image on the display long enough to be useful in navigation.

With the advent of inexpensive television CRT displays and flat panel displays of large size, radar engineers migrated the plan position indicator (PPI) image generation away from analog circuits into digital electronic circuits and firmware. Because these CRT displays and flat panel displays are designed for television, however, they generate images using a raster scan. In other words, CRT displays and flat panel displays generate images using data formatted in Cartesian coordinates rather than data formatted in polar coordinates (azimuth angle and range) natural for radars. The adaptation of radar to raster-scanned monitors may be achieved by converting the polar formatted data (generated by radar antennas) into Cartesian coordinates (which can be displayed on raster scan CRT displays and flat panel displays).

SUMMARY

According to the present invention as laid out in claim 1, disadvantages and problems associated with previous techniques for displaying radar contacts on a radar PPI display may be reduced or eliminated.

In certain embodiments, a method includes receiving a radar signal comprising one or more radar contacts each having associated location information. The method further includes determining, based on at least a portion of the location information associated with each of the one or more radar contacts, one or more pixels associated with each of the one or more radar contacts, the one or more pixels associated with each of the one or more radar contacts being one or more of a plurality of pixels of a radar PPI display. The method further includes determining that a particular radar contact of the one or more radar contacts is a trackable radar contact, determining a number of additional pixels associated with the particular radar contact, and illuminating the one or more pixels associated with the particular radar contact and the number of additional pixels associated with the particular radar contact on the radar PPI display.

Certain embodiments may provide one or more technical advantages. As a commercial ship having a conventional navigation radar system approaches a small radar contact (e.g., a buoy), the conventional radar system may make it difficult for a radar operator to see the small radar contact on a radar PPI display. Small radar contacts often fit within the beam-width of the radar system (e.g., one degree). As a result, the azimuth extent associated with a small radar contact may correspond to the beam-width of the radar system. In other words, the small radar contact may appear as an arc of illuminated pixels on the radar PPI, the number of illuminated pixels falling in the arc being defined by azimuth extent associated with the small radar contact (i.e., the beam-width of the radar, assuming the small radar contact often fits within the beam-width of the radar system). Because the beam-width of the radar may be relatively small (e.g., one degree), there may be very few illuminated pixels falling in the arc corresponding to the small radar contact, particularly near the center of the radar PPI display. As a result, it may be difficult for the radar operator to see the small radar contact on the radar PPI display. To make the small radar contacts near the center of the radar PPI display visible or more visible, the radar operator may need to periodically change the range scale of the radar system such that the small radar contacts will be displayed further from the center of the radar PPI display and more pixels will be illuminated.

Conventional techniques for eliminating the difficulty in viewing small radar contacts near the center of a radar PPI display may include displaying symbols (e.g., blinking plus signs) over the point of display corresponding to an identified trackable radar contact on the radar PPI display. In other words, all trackable radar contacts may be overlaid with a symbol on the radar PPI display. Conventional techniques may be undesirable, however, because radar operators often find the overlaid symbols distracting, particularly if there are a number small radar contacts displayed near the center of the radar PPI display. Furthermore, all trackable radar contacts are overlaid with a symbol, including those trackable radar contacts that are displayed sufficiently far from the center of the radar PPI display to be visible or more visible without an overlaid symbol. GB 2 423 657 discloses a radar system with a convention (PP) display.

Certain embodiments of the present invention may allow for a number of additional pixels to be associated with a particular radar contact that has been identified as trackable. As a result, all radar contacts may be displayed on a radar PPI display such that they are visible or more visible to a radar operator without the radar operator having to change the range scale of the radar system and without the overlay of distracting symbols. Furthermore, the number of additional pixels associated with the radar contact may be a function of the distance of the radar contact from the center of the radar PPI display. As a result, in certain embodiments, additional pixels may be added to the display associated with small radar contacts located near the center of the radar PPI display such that they are visible or more visible while the otherwise visible display associated with small radar contacts sufficiently far from the center of the radar PPI display remain unmodified.

Certain embodiments of the present invention may include some, all, or none of the above advantages. One or more other technical advantages may be readily apparent to those skilled in the art from the figures, descriptions, and claims included herein.

BRIEF DESCRIPTION OF THE DRAWINGS

To provide a more complete understanding of the present invention and the features and advantages thereof, reference is made to the following description taken in conjunction with the accompanying drawings, in which:

FIGURE 1 illustrates an example system for augmenting contact size on a radar PPI display, according to certain embodiments of the present invention.

FIGURES 2A-2C illustrate a commercial ship having example components of a system for augmenting contact size on a radar PPI display as the ship approaches a number of small radar contacts (e.g., buoys) and example radar PPI displays of the contacts, according to certain embodiments of the present invention; and

FIGURE 3 illustrates an example method for augmenting contact size on a radar PPI display, according to certain embodiments of the present invention.

DESCRIPTION OF EXAMPLE EMBODIMENTS

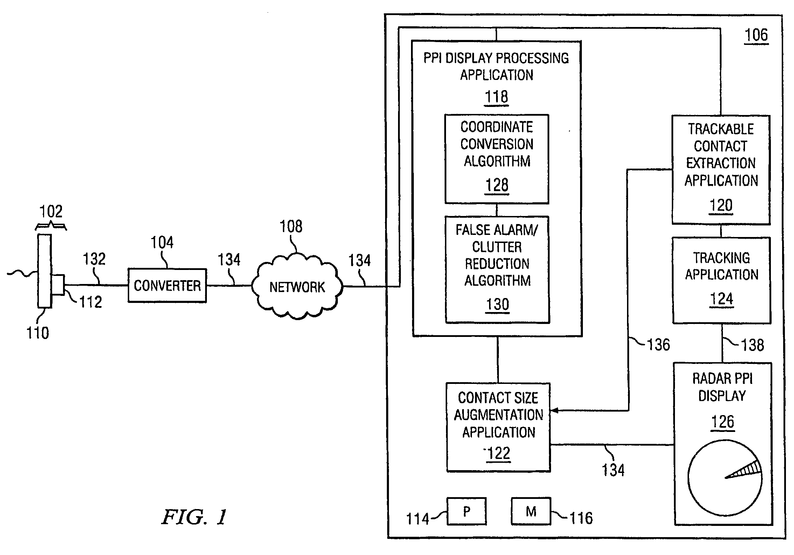

FIGURE 1 illustrates an example system 100 for augmenting contact size on a radar PPI display, according to certain embodiments of the present invention. System 100 may include one or more radar devices 102, one or more analog-to-digital converters 104, one or more radar processing systems 106, and network 108. Although this particular implementation of system 100 is illustrated and primarily described, the present invention contemplates any suitable implementation of system 100 according to particular needs. For simplicity, the one or more radar devices 102, one or more analog-to-digital converters 104, and one or more radar processing systems 106 of system 100 are referred to throughout this description primarily in the singular.

In general, system 100 is operable to generate a radar signal comprising a number of radar contacts and display the radar contacts of the radar signal on a radar PPI display. More particularly, system 100 is operable to determine one or more pixels associated with each of the radar contacts on a radar PPI display, determine that one or more particular radar contacts are trackable radar contacts, and associate a number of additional pixels with each of the one or more particular (trackable) radar contacts. System 100 is further operable to display one or more of the radar contacts of the radar signal on a radar PPI display by illuminating the determined one or more pixels associated with each of the one or more radar contacts. More particularly, system 100 is operable to display each of the one or more particular (trackable) radar contacts on a radar PPI display by illuminating both the determined one or more pixels associated with each of the one or more particular radar contacts and the determined number of additional pixels associated with each of the particular radar contacts. As a result, in certain embodiments, most or all radar contacts (those identified as trackable and those identified as non-trackable) may be displayed on a radar PPI display (including particular radar contacts close to the center of the radar PPI display) such that they are visible or more visible to a radar operator without the radar operator having to change the range scale of the radar system and without the overlay of distracting symbols.

Radar device 102 of system 100 may include a radar antenna 110 and a radar transceiver 112. Although a particular radar device 102 having particular components is depicted and primarily described, the present invention contemplates any suitable radar device 102 describing a PPI display that is searching for discrete/small/localized objects.

Radar antenna 110 may be a monostatic antenna operable to send and receive electromagnetic wave pulses generated by transceiver 112. Transceiver 112 may generate electromagnetic wave pulses having a particular frequency. As a particular example, a transceiver 112 of an X-band radar device 102 may generate electromagnetic wave pulses within the frequency range of 9300-9500 megahertz (MHz). As an additional particular example, a transceiver 112 of an S-band radar device 102 may generate electromagnetic wave pulses within the frequency range of 2900-3100 MHz. Radar device 102 may have an associated maximum range (e.g., ninety-six miles), the maximum range corresponding to the maximum distance from the radar device 102 that radar contact may be detected based on the reflection of the electromagnetic wave pulse emitted via antenna 110. The maximum range of radar device 102 may depend on the frequency of the electromagnetic wave pulses generated by transceiver 110.

Additionally, transceiver 112 may generate electromagnetic wave pulses at a particular rate (e.g., 1000 pulses per second, corresponding to a pulse repetition frequency (PRF) of one kilohertz (kHz)), and the generated electromagnetic wave pulses may be emitted via radar antenna 110 as radar antenna 110 rotates at a particular scan rate (e.g., between twelve and sixty revolutions per minute (RPM)). As a particular example, transceiver 112 may generate wave pulses at a PRF of one kHz (i.e., transceiver 112 may generate 1000 electromagnetic wave pulses per second) and radar antenna 110 may rotate at a scan rate of fifteen RPM (i.e., four seconds per revolution). Therefore, transceiver 112 may generate (and radar antenna 110 will emit) 4000 electromagnetic wave pulses during a three hundred sixty degree revolution of radar antenna 110.

Additionally, each electromagnetic wave pulse generated by transceiver 112 and emitted by radar antenna 110 may have an associated beam-width. Furthermore, the beam-width may be a function of the dimensions of radar antenna 110. For example, the electromagnetic wave pulses generated by transceiver 112 and emitted by radar antenna 110 may have a beam-width of one degree.

Radar device 102 may be operable to determine one or more radar contacts. As an electromagnetic wave pulse emitted via radar antenna 110 reaches an object (e.g., land and ships) falling within the beam-width of the emitted pulse, the emitted pulse may reflect off of the object and return to antenna 110. The object reflecting the electromagnetic wave pulse may be considered a "radar contact." The wave pulse reflection received by radar antenna 110 may have a signal strength corresponding to the amount of energy reflected by the radar contact. Transceiver 112 may be operable to calculate a strength (e.g., a number of volts) associated with a particular radar contact based on the amount of energy associated with the electromagnetic wave pulse reflections received by radar antenna 110.

Furthermore, transceiver 112 may be operable to determine a polar coordinate location associated with the radar contact (i.e., a range and an azimuth angle/range of azimuth angles). Transceiver 112 may be operable to determine the range to a radar contact by measuring the time between the moment at which the electromagnetic pulse is emitted by radar antenna 110 and the moment at which reflected electromagnetic pulse is received by radar antenna 110. Based on the measured time and the speed of light (speed at which the electromagnetic wave pulse travels), transceiver 112 may determine the round-trip distance to the radar contact, with half the round-trip distance to the radar contact being the range of the radar contact.

Transceiver 112 may be further operable to determine an azimuth angle/range of azimuth angles (an azimuth angle being an angle relative to true north) to the radar contact based on the direction that the reflected electromagnetic wave pulse was emitted by radar antenna 110. Furthermore, as described above, an electromagnetic wave pulse emitted by radar antenna 110 may have an associated beam-width (e.g., one degree). As a result, the direction to the radar contact may be expressed as a range of azimuth angles, the narrowest range of azimuth angles associated with a radar contact being equal to the beam-width of the radar antenna 110 (for radar contacts corresponding to objects falling within a single beam-width of radar antenna 110).

Thus, as radar antenna 110 rotates, transceiver 112 may generate analog radar signal 132 including a number of voltages corresponding to a number of radar contacts (the voltages based on the strength of the reflected electromagnetic wave pulse). Analog radar signal 132 may further include a polar coordinate location (i.e., a distance at a particular azimuth angle/range of azimuth angles) corresponding to the radar contacts. Transceiver 112 may generate analog radar signal 132 as a continuous stream of data or as a collection of data collected over a particular amount of time (e.g., one revolution of antenna 110). Transceiver 112 may communicate the generated analog radar signal 132 to converter 104.

Converter 104 of system 100 may be operable to convert analog radar signal 132 to digital radar signal 134. In certain embodiments, digital radar signal 132 is a full-fidelity radar signal. Converter 104 may be further operable to communicate digital radar signal 134 to radar processing system 106 via network 108.

Network 108 facilitates wireless or wireline communication. Network 108 may communicate, for example, IP packets, Frame Relay frames, Asynchronous Transfer Mode (ATM) cells, voice, video, data, and other suitable information between network addresses. Network 106 may include one or more local area networks (LANs), radio access networks (RANs), metropolitan area networks (MANs), wide area networks (WANs), all or a portion of the global computer network known as the Internet, and/or any other communication system or systems at one or more locations.

Radar processing system 106 of system 100 may include any appropriate input devices (such as a keypad, touch screen, mouse, or other device that can accept information), output devices, mass storage media, or other suitable components for receiving, processing, storing, and communicating data. Both the input device and output device may include fixed or removable storage media such as a magnetic computer disk, CD-ROM, or other suitable media to both receive input from and provide output to a user of radar processing system 104. Radar processing system 104 may include a personal computer, workstation, network computer, kiosk, wireless data port, personal data assistant (PDA), one or more processors within these or other devices, or any other suitable processing device.

"Radar processing system 106" and "user of radar processing system 106" may be used interchangeably. A user of radar processing system 106 may include, for example, a human user or a computer program or other suitable software module for automatically interacting with radar processing system 104. A particular example user of radar processing system 106 includes a radar operator of a commercial ship.

Radar processing system 106 may further include a processing module 114, a memory module 116, a PPI display processing application 118, a trackable contact extraction application 120, a contact size augmentation application 122, a tracking application 124, and a radar PPI display 126. Although certain functionality is described below as being associated with one or more applications of radar processing system 104, the present invention contemplates the functionality with one or more applications of radar processing system 104 being combined or separated among any suitable number of application according to particular needs. Moreover, the components of radar processing system 106 may be implemented in any suitable combination of firmware, hardware, and software.

Processing module 114 may include one or more microprocessors, controllers, or any other suitable computing devices or resources. Processing module 114 may work, either alone or with other components of system 100, to provide the functionality of system 100 described herein. Memory module 116 may take the form of volatile or non-volatile memory including, without limitation, magnetic media, optical media, random access memory RAM, ROM, removable media, or any other suitable memory component.

Radar processing system 106 may have an associated range scale, which may be set by a user of radar processing system 106 using any appropriate input device. The range scale of radar processing system 106 is the maximum range from the ship displayed on the radar PPI display 126. The range scale of radar processing system 106 may be an incremental value between a minimum range scale (e.g., 0.75 miles) and the maximum range of radar device 102 (e.g. ninety-six miles). For example, a user a radar processing system 106 may select a range scale (using any appropriate input device) of 0.75 miles, 1.5 miles, three miles, six miles, twelve miles, twenty-four miles, forty-eight miles, ninety-six miles, or any other suitable distance.

PPI display processing application 118 of radar processing system 106 may be operable to receive digital radar signal 134 and modify digital radar signal 134 such that it can be displayed on radar PPI display 126 by applying one or more of coordinate conversion algorithm 128 and false alarm/clutter reduction algorithm 130. Although coordinate conversion algorithm 128 and false alarm/clutter reduction algorithm 130 are depicted and primarily described as being algorithms applied by PPI display processing 118, the present invention contemplates coordinate conversion algorithm 128 and false alarm/clutter reduction algorithm 130 being separate applications of radar processing system 106 (in addition to or in lieu of PPI display processing application 118). Furthermore, although coordinate conversion algorithm 128 and false alarm/clutter reduction algorithm 130 are depicted and primarily described as being a part of PPI display processing application 118, the present invention contemplates each of the algorithms being in any suitable location such that they may be accessed by PPI display processing application 118.

Coordinate conversion algorithm 128 may associate one or more pixels of radar PPI display 126 with the one or more radar contacts of digital radar signal 134 based on at least a portion of the location information associated with the one or more radar contacts such that the one or more radar contacts may be displayed as one or more illuminated pixels on radar PPI display 126. Because a user of radar processing system 106 may change the range scale of radar processing system 106 (e.g., between 0.75 and ninety-six miles), coordinate conversion algorithm 128 may be dependent on the range scale of radar processing system 106 (as the location to which each pixel of radar PPI display 126 corresponds will depend on the range scale of radar processing system 106).

As described above, digital radar signal 134 may include one or more radar contacts, each radar contact having associated location information (i.e., a polar coordinate location associated with the radar contact including a range and azimuth angle/range of azimuth angles). Additionally, radar PPI display 126 may be a raster scan monitor (e.g., a CRT monitor, and LCD monitor, or a plasma monitor) having a plurality of pixels (each pixel having an associated location in Cartesian coordinates). In order to display the one or more radar contacts of digital radar signal 132 as one or more illuminated pixels on radar PPI display 126, PPI display processing application 118 may apply coordinate conversion algorithm 128 to digital radar signal 134 to determine the Cartesian coordinate location of one or more pixels associated with the one or more radar contacts of digital radar signal 134 based on at least a portion of the location information associated with the one or more radar contacts.

For example, a radar contact of digital radar signal 134 may have associated location information including a range (distance from the ship) of L and a range of azimuth angles of $\Theta_1$-$\Theta_2$. Furthermore, radar processing system 106 may have a range scale of S as selected by a user of radar processing system 106, and radar PPI display 126 may be a circular display having a radius $R$. Coordinate conversion algorithm 128 of PPI display processing application 118 may associate a radar contact with one or more pixels, the one or more pixels being located along an arc defined $\Theta_1$-$\Theta_2$ at a distance from the center of the radar PPI corresponding to L. In other words, coordinate conversion algorithm 128 may determine an arc of pixels lying between a first horizontal and vertical location ($X_1$, $Y_1$) on radar PPI display 126

corresponding to (L, $\Theta_1$) and a second horizontal and vertical location (X$_2$, Y$_2$) on radar PPI display 126 corresponding to (L, $\Theta_2$), where:

$$X_2 = \frac{L}{S} \cdot [R \cdot \cos(\Theta_2)] \qquad Y_2 = \frac{L}{S} \cdot [R \cdot \sin(\Theta_2)]$$

$$X_1 = \frac{L}{S} \cdot [R \cdot \cos(\Theta_1)] \qquad Y_1 = \frac{L}{S} \cdot [R \cdot \sin(\Theta_1)]$$

As a particular example, a small radar contact (e.g., a buoy) of digital radar signal 134 may have associated location information including a range (i.e., distance from the ship) of 12 miles and a range of azimuth angles thirty to thirty-one degrees (the range of azimuth angles of the location information associated with the small radar contact corresponding to the beam-width of antenna 110 -- one degree -- due to the fact that the small radar contact fits within a single beam-width of the radar antenna 110). Furthermore, radar processing system 106 may have a range scale of twenty-four miles, and radar PPI display 126 may be a circular display having a radius twelve inches. As a result, the small radar contact will be associated with an arc of pixels on radar PPI display 126 located between a first point (X$_1$, Y$_1$) on radar PPI display 126 and a second point (X$_2$, Y$_2$) on radar PPI display 126, where:

$$X_1 = \frac{12}{24} \cdot [12 \cdot \cos(30)] = 5.196 in \qquad Y_1 = \frac{12}{24} \cdot [12 \cdot \sin(30)] = 3 in$$

$$X_2 = \frac{12}{24} \cdot [R \cdot \cos(31)] = 5.143 in \qquad Y_2 = \frac{12}{24} \cdot [12 \cdot \sin(31)] = 3.0902 in$$

Because the beam-width of the radar may be relatively small (e.g., one degree), there may be only a small number of pixels falling on the arc between a first point (X$_1$, Y$_1$) on radar PPI display 126 and a second point (X$_2$, Y$_2$) on radar PPI display 126, particularly at a range corresponding to a location near the center of the radar PPI display.
False alarm/clutter reduction algorithm 130 may be operable to eliminate one or more radar contacts from digital radar signal 134 (i.e., the one or more eliminated radar contacts will not be displayed on radar PPI display 126) based at least in part on the signal strengths associated with each of the one or more radar contacts and/or the location information associated with each of the radar contacts. False alarm/clutter reduction algorithm 130 may any suitable algorithm operable to eliminate one or more radar contacts from digital radar signal 134 based at least in part on the signal strengths associated with each of the one or more radar contacts and/or the location information associated with each of the radar contacts.
Trackable contact extraction application 120 of radar processing system 106 may be operable to receive digital radar signal 134 and determine one or more trackable radar contacts (i.e., trackable contact extraction application 120 may generate trackable radar contact data 136). For example, trackable contact extraction application 120 may determine that a radar contact of digital radar signal 134 is trackable by applying one or more thresholding algorithms to digital radar signal 134 to identify contacts having a sufficiently high energy return and a small spatial content (i.e., contacts with a strong reflection from a small area). Contacts having a sufficiently high energy return and a small spatial content may be consistent with contacts that are trackable (e.g., a buoy or ship) as opposed to contacts that are not trackable (e.g., land). Trackable contact extraction application 120 may then determine the center location (in Cartesian coordinates) of the trackable radar contact.
Trackable contact extraction application 120 may communicate trackable radar contact data 136 (e.g., information associated with the one or more trackable radar contacts) to contact size augmentation application 122 and/or tracking application 124. Additionally or alternatively, trackable contact extraction application 120 may store trackable radar contact data 136 (e.g., information associated with the one or more trackable radar contacts) at any suitable location in system 100 (e.g., memory module 116) such that trackable radar contact data 136 may be accessed by contact size augmentation application 122 and/or tracking application 124
Contact size augmentation application 122 of radar processing system 106 may receive digital radar signal 134 and/or trackable radar contact data 136 (or access trackable radar contact data 136 from any suitable location in system 100). Contact size augmentation application 122 may be operable associate the one or more trackable radar contacts of trackable radar contact data 136 with a particular radar contact of digital radar signal 134. In other words, contact size augmentation application 122 may determine, based on trackable radar contact data 136, that one or more particular radar contacts of digital radar signal 134 (each of the one or more radar contacts having been associated with one or more pixels of radar PPI display 126, as described above) are particular (trackable) radar contacts. For example, contact size augmentation application 122 may determine that the center location information corresponding to a trackable radar contact (as reflected in trackable radar contact data 136) corresponds to the location of a particular radar contact of digital radar signal 134.

Contact size augmentation application 122 may be further operable to determine a number of additional pixels of radar PPI display 126 (pixels in addition to the one or more pixels of radar PPI display 126 determined based on coordinate conversion algorithm 128 of PPI processing application 118, as described above) associated with the one or more particular radar contacts. Contact size augmentation application 122 may modify the data associated with each of the particular radar contacts of digital radar signal 134 to reflect the determined additional pixels. In other words, rather than overlaying all trackable radar contacts with a symbol (as in prior techniques), the information associated with a particular contact in digital radar signal 134 may be modified by contact size augmentation application 122 to include a number of additional pixels of radar PPI display 126 (in addition to the one or more pixels of radar PPI display 126 determined based on coordinate conversion algorithm 128 of PPI processing application 118). Although several particular method for determining a number of additional pixels associated with a particular radar contact are primarily described, the present invention contemplates any suitable method for determining a number of additional pixels associated with a particular radar contact, according to particular needs.

In certain embodiments, contact size augmentation application 122 determines a number of additional pixels associated with a particular radar contact by comparing the quantity of the one or more pixels associated with the particular radar (as determined based on coordinate conversion algorithm 128 of PPI processing application 118, as described above) with a threshold quantity of pixels. More particularly, if contact size augmentation application 122 determines that the quantity of the one or more pixels associated with the particular radar contact (as determined based on coordinate conversion algorithm 128) is less than the threshold quantity, contact size augmentation application 122 may determine that the number of additional pixels associated with the particular radar contact includes a quantity that, when added to the quantity of the one or more pixels associated with the particular radar contact, is equal to or greater than the threshold quantity. The threshold quantity of pixels may correspond to the number of pixels needed to make a particular radar contact visible or more visible on radar PPI display 126. The threshold quantity may be stored at any suitable location in system 100 (e.g., memory module 116) such that it can be accessed by contact size augmentation application 122.

As a particular example, the threshold quantity of pixels may be five pixels. Contact size augmentation application 122 may determine that two pixels were associated with a particular radar contact based on coordinate conversion algorithm 128 of PPI processing application 118. As a result, contact size augmentation application 122 may determine the number of additional pixels associated with the particular radar contact is three pixels such that the quantity of the number of additional pixels (three), when added to the quantity of the one or more pixels associated with the particular radar contact coordinate conversion algorithm 128 (two pixels), is equal to the threshold quantity of pixels (five).

In certain embodiments, contact size augmentation application 122 determines a number of additional pixels associated with a particular radar contact by comparing the location information associated with the particular radar contact as determined based on coordinate conversion algorithm 128 of PPI processing application 118 (i.e., the distance the radar contact is to be displayed from the center of radar PPI display 126) with a threshold distance from the center of radar PPI display 126. More particularly, a particular number of additional pixels may be associated with a particular radar contact having associated location information indicating a distance from the center of radar PPI display 126 less than the threshold distance. As a result, a number of additional pixels may be determined only for those radar contacts to be displayed sufficiently near the center of radar PPI display 126 that they would otherwise be difficult to see (i.e., too few pixels would otherwise be illuminated).

As a particular example, the threshold distance may be equal to ten percent of radar PPI display 126 (i.e., ten percent of the distance from the center of radar PPI 126 to the outer edge of radar PPI 126), and four additional pixels are associated with particular radar contacts having a distance from the center of radar PPI display less than the threshold distance.

In certain embodiments, contact size augmentation application 122 determines a number of additional pixels associated with a particular radar contact by both comparing the quantity of the one or more pixels associated with the particular radar contact with a threshold quantity of pixels and comparing the location information associated with the particular radar contact (i.e., the distance the radar contact is to be displayed from the center of radar PPI display 126) with a threshold distance from the center of radar PPI display 126. More particularly, if contact size augmentation application 122 determines that the quantity of the one or more pixels associated with the particular radar is less than the threshold quantity and that the particular radar contact has associated location information indicating a distance from the center of radar PPI 126 less than the threshold distance, the determined number of additional pixels may a quantity that, when added to the quantity of the one or more pixels associated with the particular radar contact, is equal to or greater than the threshold quantity.

As a particular example, the threshold quantity of pixels may be five pixels and the threshold distance may be equal to ten percent of radar PPI display 126 (i.e., ten percent of the distance from the center of radar PPI 126 to the outer edge of radar PPI 126). Contact size augmentation application 122 may determine that two pixels were associated with a particular radar contact based on coordinate conversion algorithm 128 and that the location information associated with the particular radar contact indicates that the radar contact is located within five percent of the center of radar PPI 126. As a result, contact size augmentation application 122 may determine the number of additional pixels associated with the particular radar contact is three pixels such that the quantity of the number of additional pixels (three), when added to the quantity of the one or more pixels associated with the particular radar contact coordinate conversion algorithm 128 (two pixels), is equal to the threshold quantity of pixels (five).

Tracking application 124 of radar processing system 106 may receive digital radar signal 134 and/or trackable radar contact data 136 (or access trackable radar contact data 136 from any suitable location in system 100). Tracking application 124 may be operable to generate tracking information associated with each of the one or more trackable radar contacts.

In certain embodiments, tracking application 124 includes a tracking filter (e.g., a Kalman filter). The tracking filter may track the one or more trackable radar contacts over time such that a velocity vectors associated the one or more trackable radar contacts may be determined.

For example, tracking application 124 may receive/access trackable radar contact data 136 including the center location of one or more trackable radar contacts. Tracking application 124 may store (e.g., in memory module 116 or at any other suitable location in system 100) the center locations associated with each of the one or more trackable radar contacts among one or more previously stored center locations associated with one or more trackable radar contacts or previously received trackable radar contact data 136.

Tracking application 124 may be further operable to determine that a trackable radar contact of trackable radar contact data 136 corresponds to one or more previously received trackable radar contacts (i.e., that the trackable radar contact corresponds to the same object as the one or more previously received trackable radar contacts) of previously received trackable radar contact data 136 (e.g., based on the center location associated with the trackable radar contact as compared to previously stored center locations). Based on the change in the center location of the trackable radar contact as compared to the center location of the previously received one or more associated trackable radar contacts, tracking application 124 may determine a velocity vector (i.e., a direction and velocity) associated the particular contact.

Tracking application 124 may be further operable to determine one or more pixels of radar PPI display 126 associated with each determined velocity vector such that each determined velocity vector may be displayed on radar PPI display 126 (the one or more pixels associated with the velocity vectors of the one or more trackable radar contacts being the track data 138). For example, each determined velocity vector may be displayed on radar PPI display 126 as a line of illuminated pixels extending from the center location of the particular radar contact in the direction of movement of the particular radar contact, the length of the line corresponding to the velocity of the particular contact. Tracking application 124 may be further operable to communicate track data 138 to radar PPI display 126.

Radar PPI display 126 of radar processing system 106 may be a raster scan monitor (e.g., a CRT monitor, and LCD monitor, or a plasma monitor) having a plurality of pixels (each pixel having an associated location in Cartesian coordinates), as described above. Radar PPI display 126 may receive digital radar signal 134 from contact size augmentation application 122 and track data 138 from tracking application 124.

Digital radar signal 134 may include one or more pixels of radar PPI display 126 associated with one or more radar contacts as determined by PPI display processing application 118, as described above. Digital radar signal 134 may further include a number of additional pixels of radar PPI display 126 (pixels in addition to those determined by PPI display processing application 118) associated with one or more particular radar contacts (radar contacts identified by trackable contact extraction application 120 as being trackable) as determined by contact size augmentation application 122. Additionally, track data 136 may include one or more pixels of radar PPI display 126 associated with velocity vectors associated with the one or trackable radar contacts as determined by tracking application 124, as described above.

Radar PPI display 126 may be operable to generate a PPI display by illuminating the one or more pixels associate with the one or more radar contacts, the a number of additional pixels associated with the one or more particular radar contacts, and the one or more pixels associated with the velocity vectors associated with the one or more particular radar contacts.

FIGURE 1 merely provides one example of computers that may be used with the invention. The present invention contemplates computers other than general purpose computers as well as computers without conventional operating systems. As used in this document, the term "computer" is intended to encompass a personal computer, workstation, network computer, a portable computing device, or any other suitable processing device. Furthermore, each computer system of system 100 may include one or more processing modules and one or more memory modules. A processing module may include one or more microprocessors, controllers, or any other suitable computing devices or resources. Processing modules may work, either alone or with other components of system 100, to provide the functionality of system 100 described herein. Each memory module may take the form of volatile or non-volatile memory including, without limitation, magnetic media, optical media, RAM, ROM, removable media, or any other suitable memory component.

Although a particular number components of system 100 have been illustrated and primarily described, the present invention contemplates system 100 including any suitable number of such components. Furthermore, the various components of system 100 described above may be local or remote from one another and may be implemented in any suitable combination of hardware, firmware, and software.

In operation of an example embodiment radar device 102 generates analog radar signal 132, analog radar signal 132 including one or more radar contacts. More particularly, analog radar signal 132 includes a signal strength (i.e., a voltage) and location information (i.e., a polar coordinate location -- a distance at a particular azimuth angle/range of azimuth angles) associated with each of the one or more radar contacts. Converter 104 then receives analog radar signal 132 and converts the signal to digital radar signal 134.

PPI display processing application 118 of radar processing system 106 receives digital radar signal 134 from converter 104 and applies coordinate conversion algorithm 128 to digital radar signal 134, coordinate conversion algorithm operable to associate one or more pixels of radar PPI display 128 with each of the one or more radar contacts according to at least a portion of the location information associated with each of the one or more radar contacts.

For example, a radar contact of digital radar signal 134 may have associated location information including a range (distance from the ship) of $L$ and a range of azimuth angles of $\Theta_1$-$\Theta_2$. Coordinate conversion algorithm 128 of PPI display processing application 118 may associate a radar contact with one or more pixels, the one or more pixels being located along an arc defined $\Theta_1$-$\Theta_2$ at a distance from the center of the radar PPI corresponding to $L$. In other words, coordinate conversion algorithm 128 may determine an arc of pixels lying between a first horizontal and vertical location $(X_1, Y_1)$ on radar PPI display 126 corresponding to $(L, \Theta_1)$ and a second horizontal and vertical location $(X_2, Y_2)$ on radar PPI display 126 corresponding to $(L, \Theta_2)$, as described above.

PPI display processing application 118 may apply false alarm/clutter reduction algorithm 130 to digital radar signal 130 to eliminate one or more radar contacts from digital radar signal 134.

Contact size augmentation application 122 (e.g., in response to receiving digital radar signal 134 from PPI display processing algorithm 118), may determine that a particular radar contact of digital radar signal 134 is a trackable radar contact. Contact size augmentation application 122 may determine that a particular radar contact of digital radar signal 134 is a trackable radar contact by comparing at least a portion of the location information associated with the particular radar contact of digital radar signal 134 with the one or more trackable radar contacts of one or more trackable radar contacts of trackable radar contact data 136 (generated by trackable contact extraction application 120, as described above). For example, contact size augmentation application 122 may determine that the center location information corresponding to a trackable radar contact (as reflected in trackable radar contact data 136) corresponds to the location of a particular radar contact of digital radar signal 134.

Contact size augmentation application 122 may determine a number of additional pixels (pixels in addition to the one or more pixels of radar PPI display 126 determined based on coordinate conversion algorithm 128 of PPI processing application 118) associated with the particular radar contact. Contact size augmentation application 122 may modify the data associated with each of the particular radar contacts of digital radar signal 134 to reflect the determined additional pixels (i.e., the information associated with a particular contact in digital radar signal 134 may include one or more pixels of radar PPI display 126 determined based on coordinate conversion algorithm 128 of PPI processing application 118 and a number of additional pixels of radar PPI display 126 determined by contact size augmentation application 122).

Contact size augmentation application 122 may determine a number of additional pixels associated with a particular radar contact by comparing the quantity of the one or more pixels associated with the particular radar contact (as determined based on coordinate conversion algorithm 128 of PPI processing application 118) with a threshold quantity of pixels (e.g., five pixels), as described above. Additionally or alternatively, contact size augmentation application 122 may determine a number of additional pixels associated with a particular radar contact by comparing the location information associated with the particular radar contact as determined based on coordinate conversion algorithm 128 of PPI processing application 118 (i.e., the distance the radar contact is to be displayed from the center of radar PPI display 126) with a threshold distances from the center of radar PPI display 126 (with a particular number of additional pixels being associated with particular radar contacts having a distance from the center of radar PPI 126 less than the threshold distance). Additionally or alternatively, contact size augmentation application 122 may determine a number of additional pixels associated with a particular radar contact both by comparing the quantity of the one or more pixels associated with the particular radar with a threshold quantity of pixels and comparing the location information associated with the particular radar contact (i.e., the distance the radar contact is to be displayed from the center of radar PPI display 126) with a threshold distances from the center of radar PPI display 126.

Radar PPI display 126 (e.g., in response to receiving digital radar signal 134 from contact size augmentation application 122), may illuminate the one or more pixels associated with the particular radar contact (as determined based on coordinate conversion algorithm 128 of PPI display processing application 118 is step 304, described above) and the number or additional pixels associated with the particular radar contact (as determined by contact size augmentation application 122 in step 310, described above). Radar PPI display 126 may also illuminate the one or more pixels associated with one or more velocity vectors associated with the one or more particular radar contacts based on track data 138 received from tracking application 124.

Certain embodiments may provide one or more technical advantages. As a commercial ship having a conventional navigation radar system approaches a small radar contact (e.g., a buoy), the conventional radar system may make it difficult for a radar operator to see the small radar contact on a radar PPI display. Small radar contacts often fit within the beam-width of the radar system (e.g., one degree). As a result, the azimuth extent associated with a small radar contact may correspond to the beam-width of the radar system. In other words, the small radar contact may appear as an arc of illuminated pixels on the radar PPI, the number of illuminated pixels falling in the arc being defined by azimuth extent associated with the small radar contact (i.e., the beam-width of the radar, assuming the small radar contact often fits within the beam-width of the radar system). Because the beam-width of the radar may be relatively small (e.g., one degree), there may be very few illuminated pixels falling in the arc corresponding to the small radar contact, particularly near the center of the radar PPI display. As a result, it may be difficult for the radar operator to see the small radar contact on the radar PPI display. To make the small radar contacts near the center of the radar PPI display visible or more visible, the radar operator may need to periodically change the range scale of the radar system such that the small radar contacts will be displayed further from the center of the radar PPI display and more pixels will be illuminated.

Conventional techniques for eliminating the difficulty in viewing small radar contacts near the center of a radar PPI display may include displaying symbols (e.g., blinking plus signs) over the point of display corresponding to an identified trackable radar contact on the radar PPI display. In other words, all trackable radar contacts may be overlaid with a symbol on the radar PPI display. Conventional techniques may be undesirable, however, because radar operators often find the overlaid symbols distracting, particularly if there are a number small radar contacts displayed near the center of the radar PPI display. Furthermore, all trackable radar contacts are overlaid with a symbol, including those trackable radar contacts that are displayed sufficiently far from the center of the radar PPI display to be visible or more visible without an overlaid symbol.

Certain embodiments of the present invention may allow for a number of additional pixels to be associated with a particular radar contact that has been identified as trackable. As a result, all radar contacts may be displayed on radar PPI display 126 such that they are visible or more visible to a radar operator (i.e., a user of radar processing system 106) without the radar operator having to change the range scale of the radar system and without the overlay of distracting symbols. Furthermore, the number of additional pixels associated with the particular radar contacts may be a function of the distance of the radar contact from the center of the radar PPI display. As a result, in certain embodiments, additional pixels may be added to the display associated with small radar contacts located near the center of radar PPI display 126 such that they are visible or more visible while the otherwise visible display associated with small radar contacts sufficiently far from the center of the radar PPI display remain unmodified.

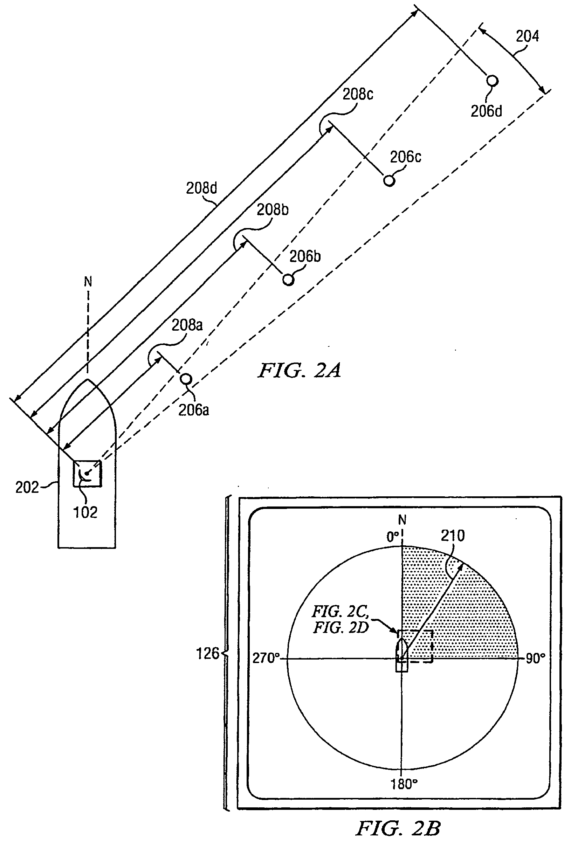

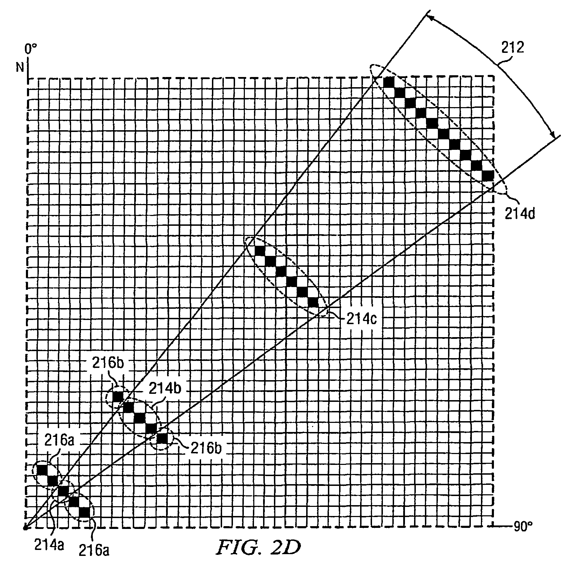

FIGURES 2A-2C illustrate a commercial ship 202 having example components of a system 100 for augmenting contact size on a radar PPI display as the ship approaches a number of particular (trackable) radar contacts 206 (e.g., buoys) and example radar PPI displays 126 of the contacts 206, according to certain embodiments of the present invention.

More particularly, FIGURE 2A illustrates a ship 202 having a radar device 102 as the ship 202 approaches particular radar contact 206a (at a range of 208a), particular radar contact 206b (at a range of 208b) particular radar contact 206c (at a range of 208c), and particular radar contact 206d (at a range of 208d). As a result, digital radar signal 134 generated by radar device 102 (and converted from analog-to-digital by converter 104) may include location information for particular radar contact 206a including a range of 208a, location information for particular radar contact 206b including a range of 208b location information for particular radar contact 206c including a range of 208c, and location information for particular radar contact 206d including a range of 208d

Furthermore, each of the particular radar contacts 206 may fall within a single beam-width 204 or antenna 110. As a result, the location information associated with small radar contacts 206 may include a range of azimuth angles corresponding to beam-width 204 of antenna 110.

FIGURE 2B illustrates a number of pixels located near the center of radar PPI display 126 having a range scale 210 (the illustrated number of pixels located on a portion of radar PPI display corresponding to azimuth angles from zero to ninety degrees), the number of pixels including one or more pixels 214 associated with each small target 206 as determined based on coordinate conversion algorithm 128 of PPI display processing application 118. Because each of the small radar contacts 206 falls within a single beam-width 204 of antenna 110, the azimuth extent 212 associated with each particular radar contact 206 corresponds to the beam-width 206 of the antenna 110. Therefore, the one or more pixels 214 of radar PPI display 126 associated with each particular radar contact 206 by coordinate conversion algorithm 128 of radar PPI processing application 118 include the one or more pixels located on the arc being defined by azimuth extent 212 associated with each particular radar contact 206. As a result, fewer pixels 214 may be associated with a particular radar contact 206 located near the center of radar PPI 126 than would be associated with a particular radar contact 206 of the same size (i.e., the same azimuth extent 212) located further from the center of radar PPI display 126.

More particularly, particular radar contact 206a is associated with the single pixel (214a) located on the arc defined by azimuth extent 212, particular radar contact 206b is associated with the three pixels (collectively 214b) located on the arc defined by azimuth extent 212, particular radar contact 206c is associated with the six pixels (collectively 214c) located on the arc defined by azimuth extent 212, and particular radar contact 206d is associated with ten pixels (collectively 214a) located on the arc defined by azimuth extent 212.

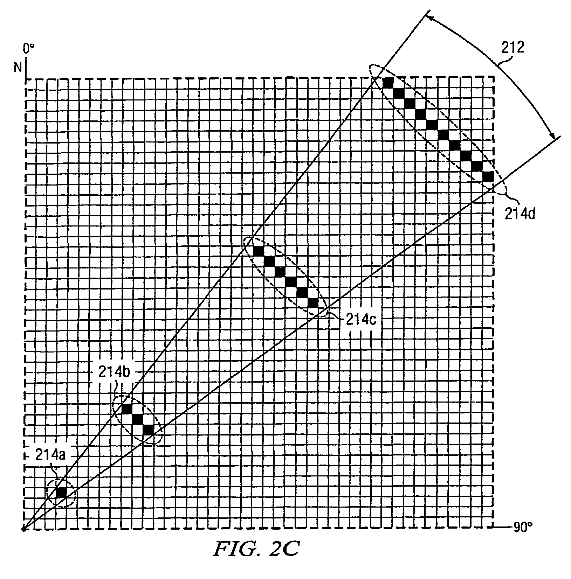

FIGURE 2C illustrates the number of pixels depicted in FIGURE 2B (the one or more pixels 214 associated with each particular radar contact 206 as determined based on coordinate conversion algorithm 128 of PPI display processing application 118) as well as a number of additional pixels 216 associated with each particular radar contact 206 as determined by contact size augmentation application 122, as described above.

As described above, in certain embodiments, contact size augmentation application 122 determines a number of additional pixels 216 associated with a particular radar contact 206 by both comparing the quantity of the one or more pixels 214 associated with the particular radar contact with a threshold quantity of pixels and comparing the location information associated with the particular radar contact 206 (i.e., the distance the radar contact is to be displayed from the center of radar PPI display 126) with a threshold distance from the center of radar PPI display 126. More particularly, if contact size augmentation application 122 determines that the quantity of the one or more pixels 214 associated with the particular radar 206 is less than the threshold quantity and that the particular radar contact 206 has associated location information indicating a distance from the center of radar PPI 126 less than the threshold distance, the determined number of additional pixels may be a quantity that, when added to the quantity of the one or more pixels associated with the particular radar contact, is equal to or greater than the threshold quantity.

As a particular example, the threshold quantity of pixels may be five pixels and the threshold distance may be equal to ten percent of radar PPI display 126 (i.e., ten percent of the distance from the center of radar PPI 126 to the outer edge of radar PPI 126). Assuming that particular radar contacts 206a-d are each located within ten percent of the center of radar PPI 126, contact size augmentation algorithm 122 would determine, for each particular contact 206, whether the quantity of the one or more pixels 214 associated with the particular contact is less than five.

Contact size augmentation application 122 may determine the number of additional pixels 216a associated with the particular radar contact 206a is four pixels such that the quantity of the number of additional pixels 216a (four), when added to the quantity of the one or more pixels 214a associated with the particular radar contact 206a based on coordinate conversion algorithm 128 (one pixel), is equal to the threshold quantity of pixels (five).

Similarly, contact size augmentation application 122 may determine the number of additional pixels 216b associated with the particular radar contact 206b is two pixels such that the quantity of the number of additional pixels 216b (two), when added to the quantity of the one or more pixels 214b associated with the particular radar contact 206b based on coordinate conversion algorithm 128 (three pixels), is equal to the threshold quantity of pixels (five).

Contact size augmentation algorithm 122 may determine the number of additional pixels 216c associated with the particular radar contact 206c is zero pixels as particular contact 206c has six associated pixels 214c (greater than the threshold quantity of pixels). Similarly, contact size augmentation algorithm 122 may determine the number of additional pixels 216d associated with the particular radar contact 206d is zero pixels as particular contact 206d has ten associated pixels 214d (greater than the threshold quantity of pixels).

Although the number of additional pixels 216 associated with each particular radar contact 206 are depicted as being located in a particular position relative to the one or more pixels 214 associated with each particular contact 206 (as determined based on coordinate conversion algorithm 128 of radar PPI processing application 118), the present invention contemplates the number of additional pixels 216 associated with each particular radar contact 206 being located in any suitable position relative to the one or more pixels 214 associated with each particular contact 206, according to particular needs.

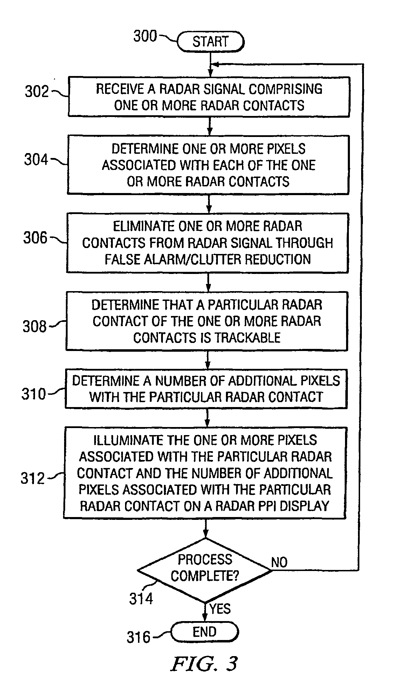

FIGURE 3 illustrates an example method for augmenting contact size on a radar PPI display, according to certain embodiments of the present invention. The method begins at step 300. At step 302, PPI display processing application 118 of radar processing system 106 receives digital radar signal 134 from converter 104, digital radar signal 134 including one or more radar contacts. Additionally, digital radar signal 134 may include a signal strength and location information (i.e., range and azimuth angle/range of azimuth angles) associated with the one or more radar contacts.

At step 304, PPI display processing application 118 applies coordinate conversion algorithm 128 to digital radar signal 134, coordinate conversion algorithm operable to associate one or more pixels of radar PPI display 128 with each of the one or more radar contacts according to at least a portion of the location information associated with each of the one or more radar contacts such that the one or more radar contacts may be displayed as one or more illuminated pixels on radar PPI display 126. Because a user of radar processing system 106 may change the range scale of radar processing system 106 (e.g., between 0.75 and ninety-six miles), coordinate conversion algorithm 128 may be dependent on the range scale of radar processing system 106 (as the location to which each pixel of radar PPI display 126 corresponds will depend on the range scale of radar processing system 106).

For example, a radar contact of digital radar signal 134 may have associated location information including a range (distance from the ship) of L and a range of azimuth angles of $\Theta_1$-$\Theta_2$, Coordinate conversion algorithm 128 of PPI display processing application 118 may associate a radar contact with one or more pixels, the one or more pixels being located along an arc defined $\Theta_1$-$\Theta_2$ at a distance from the center of the radar PPI corresponding to $L$. In other words, coordinate conversion algorithm 128 may determine an arc of pixels lying between a first horizontal and vertical location $(X_1, Y_1)$ on radar PPI display 126 corresponding to $(L, \Theta_1)$ and a second horizontal and vertical location $(X_2, Y_2)$ on radar PPI display 126 corresponding to $(L, \Theta_2)$, as described above.

At step 306, PPI display processing application 118 applies false alarm/clutter reduction algorithm 130 to digital radar signal 130 to eliminate one or more radar contacts from digital radar signal 134.

At step 308, contact size augmentation application 122 (e.g., in response to receiving digital radar signal 134 from PPI display processing algorithm 118), determines that a particular radar contact of digital radar signal 134 is a trackable radar contact. Contact size augmentation application 122 may determine that a particular radar contact of digital radar signal 134 is a trackable radar contact by comparing at least a portion of the location information associated with the particular radar contact of digital radar signal 134 with the one or more trackable radar contacts of one or more trackable radar contacts of trackable radar contact data 136 (generated by trackable contact extraction application 120, as described above). For example, contact size augmentation application 122 may determine that the center location information corresponding to a trackable radar contact (as reflected in trackable radar contact data 136) corresponds to the location of a particular radar contact of digital radar signal 134.

At step 310, contact size augmentation application 122 determines a number of additional pixels (pixels in addition to the one or more pixels of radar PPI display 126 determined based on coordinate conversion algorithm 128 of PPI processing application 118 in step 304, as described above) associated with the particular radar contact. Contact size augmentation application 122 may modify the data associated with each of the particular radar contacts of digital radar signal 134 to reflect the determined additional pixels (i.e., the information associated with a particular contact in digital radar signal 134 may include one or more pixels of radar PPI display 126 determined based on coordinate conversion algorithm 128 of PPI processing application 118 and a number of additional pixels of radar PPI display 126 determined by contact size augmentation application 122).

Contact size augmentation application 122 may determine a number of additional pixels associated with a particular radar contact by comparing the quantity of the one or more pixels associated with the particular radar as determined based on coordinate conversion algorithm 128 of PPI processing application 118 with a threshold quantity of pixels (e.g., five pixels), as described above. Additionally or alternatively, contact size augmentation application 122 may determine a number of additional pixels associated with a particular radar contact by comparing the location information associated with the particular radar contact as determined based on coordinate conversion algorithm 128 of PPI processing application 118 (i.e., the distance the radar contact is to be displayed from the center of radar PPI display 126) with a threshold distances from the center of radar PPI display 126 (with a particular number of additional pixels being associated with particular radar contacts having a distance from the center of radar PPI 126 less than the threshold distance). Additionally or alternatively, contact size augmentation application 122 may determine a number of additional pixels associated with a particular radar contact both by comparing the quantity of the one or more pixels associated with the particular radar with a threshold quantity of pixels and comparing the location information associated with the particular radar contact (i.e., the distance the radar contact is to be displayed from the center of radar PPI display 126) with a threshold distances from the center of radar PPI display 126.

At step 312, radar PPI display 126 (e.g., in response to receiving digital radar signal 134 from contact size augmentation application 122), illuminates the one or more pixels associated with the particular radar contact (as determined based on coordinate conversion algorithm 128 of PPI display processing application 118 is step 304, described above) and the number or additional pixels associated with the particular radar contact (as determined by contact size augmentation application 122 in step 310, described above). Radar PPI display 126 may also illuminate the one or more pixels associated with one or more velocity vectors associated with the one or more particular radar contacts based on track data 138 received from tracking application 124.

At step 314, a determination is made as to whether the process is complete. For example, a determination that the process is complete may correspond to system 100 being powered off. If a determination is made that the process is complete, the method ends at step 316. If a determination is made that the process is not complete, the method returns to step 302 and another radar signal is received by PPI display processing application 118.

**Claims**

**1.** A method for augmenting radar contact size on a radar plan position indicator (PPI) display, comprising the steps of:

receiving a radar signal (132, 134) comprising one or more radar contacts,

each of the one or more radar contacts having associated location information;

determining, based on at least a portion of the location information associated with each of the one or more radar contacts, one or more pixels (214) associated with each of the one or more radar contacts, the one or more pixels (214) associated with each of the one or more radar contacts being one or more of a plurality of pixels (214) of a radar PPI display (126);

**characterized by** determining that a particular radar contact (206) of the one or more radar contacts is trackable; by determining that a trackable radar contact corresponds to the same object as one or more previously received trackable radar contacts wherein the one or more trackable radar contacts are one or more of the one or more radar contacts of the radar signal having associated location information indicating contacts with a strong reflection from a small area in form of a small spatial content associated with sufficiently high energy returns:

determining a number of additional pixels (216) associated with the particular radar contact (206); and

illuminating the one or more pixels (214) associated with the particular radar contact (206) and the number of additional pixels (216) associated with the particular radar contact (206a) on the radar PPI display (126).

2. The method of Claim 1, wherein:

the location information associated with each associated of the one or more radar contacts (206) comprises a polar coordinate location associated with the radar contact (206); and

determining one or more pixels (214) associated with each of the one or more radar contacts (206) comprises converting the polar coordinate location associated with each of the one or more radar contacts (206) to one or more Cartesian coordinate locations associated with one or more pixels (214) of the radar PPI display (126).

3. The method of any of the preceding Claims, wherein the step of determining a number of additional pixels (216) associated with the particular contact (206) comprises determining that the quantity of the one or more pixels (214) associated with the particular radar contacts (206) is less than a threshold quantity of pixels (214), the number of additional pixels (216) being a quantity that, when added to the quantity of the one or more pixels (214) associated with the particular radar contact (206), is equal to or greater than the threshold quantity.

4. The method of any of the preceding Claims, wherein threshold quantity of pixels (214) is equal to four.

5. The method of any of the preceding Claims, wherein the step of determining a number of additional pixels (216) associated with the particular contact (206a) comprises:

determining, based on at least a portion of the location information associated with the particular radar contact (206a), a distance (208a) from the center of the radar PPI display (126) associated with the particular radar contact (206a);

determining that the distance (208a) from the center of the radar PPI display (126) associated with the particular radar contact (206a) is less than a threshold distance; and

associating a particular number of additional pixels (216a) with the particular radar contact (206a) based on the determination that the distance (208a) from the center of the radar PPI display (126) associated with the particular radar contact (206a) is less than the threshold distance.

6. A system for augmenting radar contact size on a radar PPI display, comprising:

one or more processing units (118, 120, 122, 124) operable to:

receive a radar signal (132, 134) comprising one or more radar contacts, each of the one or more radar contacts having associated location information;

determine, based on at least a portion of the location information associated with each of the one or more radar contacts, one or more pixels (214) associated with each of the one or more radar contacts, the one or more pixels (214) associated with each of the one or more radar contacts being one or more of a plurality of pixels (214) of a radar PPI display (126); **characterized by** further more being operable to

determine that a particular radar contact (206a) of the one or more radar contacts (206) is trackable, by determining that a trackable radar contact corresponds to the same object as one or more previously received trackable radar contacts wherein the one or more trackable radar contacts are one or more of the one or more radar contacts of the radar signal having associated location information indicating contacts with a strong reflection from a small area in form of a small spatial content associated with sufficiently high energy returns:

determine a number of additional pixels (216) associated with the particular radar contact (206); and illuminate the one or more pixels (214) associated with the particular radar contact (206) and the number of additional pixels (216) associated with the particular radar contact (206) on the radar PPI display (126).

7. The system of Claim 6, wherein:

the location information associated with each associated of the one or more radar contacts (206) comprises a polar coordinate location associated with the radar contact (206); and
wherein the one or more processing units (118) are operable to determine one or more pixels (214) associated with each of the one or more radar contacts (206) by converting the polar coordinate location associated with each of the one or more radar contacts (206) to one or more Cartesian coordinate locations associated with one or more pixels (214) of the radar PPI display.

8. The system of Claim 6 or 7, wherein the one or more processing units (122) are operable to determine a number of additional pixels (216) associated with the particular contact (206) by determining that the quantity of the one or more pixels (214) associated with the particular radar contacts is less than a threshold quantity of pixels (214), the number of additional pixels (216) being a quantity that, when added to the quantity of the one or more pixels (214) associated with the particular radar contact (206), is equal to or greater than the threshold quantity.

9. The system of any of Claims 6 to 8, wherein the threshold quantity of pixels (214) is equal to four.

10. The system of any of Claims 6 to 9, wherein the one or more processing units are operable to determine a number of additional pixels (2146) associated with the particular contact (206a) by:

determining, based on at least a portion of the location information associated with the particular radar contact (206), a distance (208a) from the center of the radar PPI display (126) associated with the particular radar contact (206);
determining that the distance (208a) from the center of the radar PPI display (126) associated with the particular radar contact (206a) is less than a threshold distance; and
associating a particular number of additional pixels (216a) with the particular radar contact (206a) based on the determination that the distance (208a) from the center of the radar PPI display (126) associated with the particular radar contact (206a) is less than the threshold distance.

11. Software for augmenting radar contact size on a radar PPI display, the software embodied in a computer-readable medium and when executed operable to perform a method according to at least any one of the claims 1 to 5.

**Patentansprüche**

1. Verfahren zur Erweiterung einer Radarkontaktgröße auf einer Anzeige eines Radarplanpositionsindikators (PPI), mit den Schritten,
ein Radarsignal (132, 134) zu empfangen, das einen oder mehrere Radarkontakte aufweist, wobei jedes des einen oder der mehreren Radarkontakte eine zugeordnete Ortsinformation besitzt;
auf der Grundlage mindestens eines Teils der Ortsinformation, die jedem des einen oder der mehreren Radarkontakte zugeordnet ist, einen oder mehrere Bildpunkte (214) zu ermitteln, die jedem des einen oder der mehreren Radarkontakte zugeordnet sind, wobei der eine oder die mehreren Bildpunkte (214), die mit jedem des einen oder der mehreren Radarkontakte zugeordnet sind, ein oder mehrere Bildpunkte aus einer Vielzahl von Bildpunkten (214) einer Radar-PPI-Anzeige (126) sind,
**gekennzeichnet durch** die Schritte
zu ermitteln, dass ein bestimmter Radarkontakt (206) des einen oder der mehreren Radarkontakte auffindbar ist, und zwar **durch** Ermittlung, dass ein auffindbarer Radarkontakt demselben Objekt entspricht wie ein oder mehrere zuvor empfangene auffindbare Radarkontakte, wobei der eine oder die mehreren auffindbaren Radarkontakte einer oder mehrere des einen oder der mehreren Radarkontakte des Radarsignals mit zugeordneter Ortsinformation sind, die Kontakte mit starker Reflexion von einem kleinen Bereich in Form eines kleinen Rauminhaltes angibt, der einer ausreichend hohen Energierückgabe zugeordnet ist;
eine Anzahl von zusätzlichen Bildpunkten (216) zu ermitteln, die dem bestimmten Radarkontakt (206) zugeordnet sind; und
den einen oder die mehreren Bildpunkte (214), die dem bestimmten Radarkontakt (206) zugeordnet sind, und die Anzahl der zusätzlichen Bildpunkte (216), die dem bestimmten Radarkontakt (206a) zugeordnet sind, auf der Radar-PPI-Anzeige (126) zu beleuchten.

2. Verfahren nach Anspruch 1, bei welchem
   die Ortsinformation, die jedem zugehörigen des einen oder der mehreren Radarkontakte (206) zugeordnet sind, Polarkoordinaten des dem Radarkontakt (206) zugeordneten Ortes aufweist; und
   die Erfassung von einem oder mehreren Bildpunkten (214), die jedem des einen oder der mehreren Radarkontakte (206) zugeordnet sind, eine Umwandlung der Polarkoordinaten des jedem des einen oder der mehreren Radarkontakte (206) zugeordneten Ortes in einen oder mehrere Orte mit kartesischen Koordinaten, die einem oder mehreren Bildpunkten (214) der Radar-PPI-Anzeige (126) zugeordnet sind, umfasst.

3. Verfahren nach einem der vorangegangenen Ansprüche, bei welchem der Schritt der Erfassung einer Anzahl von zusätzlichen Bildpunkten (216), die dem bestimmten Kontakt (206) zugeordnet sind, eine Erfassung umfasst, wonach die Quantität des einen oder der mehreren Bildpunkte (214), die den bestimmten Radarkontakten (206) zugeordnet sind, kleiner als eine Schwellwertquantität der Bildpunkte (214) ist, wobei die Anzahl der zusätzlichen Bildpunkte (216) eine Quantität bildet, die unter Hinzufügung zur Quantität des einen oder der mehreren Bildpunkte (214), die dem bestimmten Radarkontakt (206) zugeordnet sind, gleich oder größer als die Schwellwertquantität ist.

4. Verfahren nach einem der vorangegangenen Ansprüche, bei welchem die Schwellwertquantität der Bildpunkte (214) gleich vier ist.

5. Verfahren nach einem der vorangegangenen Ansprüche, bei welchem der Schritt der Erfassung einer Anzahl von zusätzlichen Bildpunkten (216), die dem bestimmten Kontakt (206a) zugeordnet sind, umfasst:

   auf der Grundlage mindestens eines Teils der Ortsinformation, die dem bestimmten Radarkontakt (206a) zugeordnet ist, eine Distanz (208a) vom Zentrum der Radar-PPI-Anzeige (126) zu erfassen, die dem bestimmten Radarkontakt (206a) zugeordnet ist;
   zu erfassen, dass die Distanz (208a) vom Zentrum der Radar-PPI-Anzeige (126), die dem bestimmten Radarkontakt (206a) zugeordnet ist, kleiner als eine Schwellwertdistanz ist; und
   eine bestimmte Anzahl von zusätzlichen Bildpunkten (216a) dem bestimmten Radarkontakt (206a) zuzuordnen, und zwar durch Erfassung, dass die Distanz (208a) vom Zentrum der Radar-PPI-Anzeige (126), die dem bestimmten Radarkontakt (206a) zugeordnet ist, kleiner als die Schwellwertdistanz ist.

6. System zur Erweiterung einer Radarkontaktgröße auf einer Radar-PPI-Anzeige mit:

   einer oder mehreren Verarbeitungseinheiten (118, 120, 122, 124), die betreibbar sind, um
   ein Radarsignal (132, 134) mit einem oder mehreren Radarkontakten zu empfangen, wobei jeder der einen oder mehreren Radarkontakte eine zugeordnete Ortsinformation besitzt;
   auf der Grundlage mindestens eines Teils der Ortsinformation, die jedem des einen oder der mehreren Radarkontakte zugeordnet ist, einen oder mehrere Bildpunkte (214) zu ermitteln, die jedem des einen oder der mehreren Radarkontakte zugeordnet sind, wobei der eine oder die mehreren Bildpunkte (214), die jedem des einen oder der mehreren Radarkontakte zugeordnet sind, ein oder mehrere Bildpunkte aus einer Vielzahl von Bildpunkten (214) einer Radar-PPI-Anzeige (126) sind;
   **dadurch gekennzeichnet, dass** sie des Weiteren betreibbar sind, um zu ermitteln, dass ein bestimmter Radarkontakt (206) des einen oder der mehreren Radarkontakte (206) auffindbar ist, und zwar durch Ermittlung, dass ein auffindbarer Radarkontakt demselben Objekt entspricht wie der eine oder die mehreren zuvor empfangenen auffindbaren Radarkontakte, wobei der eine oder die mehreren auffindbaren Radarkontakte ein oder mehrere des einen oder der mehreren Radarkontakte des Radarsignales mit einer zugeordneten Ortsinformation sind, die Kontakte mit einer starken Reflexion von einem kleinen Bereich in Form eines kleinen Rauminhaltes anzeigt, der einer ausreichend hohen Energierückgabe zugeordnet ist;
   eine Anzahl von zusätzlichen Bildpunkten (216) zu ermitteln, die dem bestimmten Radarkontakt (206) zugeordnet sind; und
   den einen oder die mehreren Bildpunkten (214), die dem bestimmten Radarkontakt (206) zugeordnet sind, und die Zahl der zusätzlichen Bildpunkte (216), die dem bestimmten Radarkontakt (206) zugeordnet sind, auf der Radar-PPI-Anzeige (126) zu beleuchten.

7. System nach Anspruch 6, bei welchem
   die Ortsinformation, die jedem zugeordneten des einen oder der mehreren Radarkontakte (206) zugeordnet ist, Polarkoordinaten des dem Radarkontakt (206) zugeordneten Ortes aufweist; und

wobei die eine oder mehreren Verarbeitungseinheiten (118) betreibbar sind, um einen oder mehrere Bildpunkte (214) zu ermitteln, die jedem des einen oder der mehreren Radarkontakte (206) zugeordnet sind, und zwar durch Umwandlung der Polarkoordinaten des jedem des einen oder der mehreren Radarkontakte (206) zugeordneten Ortes in einen oder mehrere Orte mit kartesischen Koordinaten, die einem oder mehreren Bildpunkten (214) der Radar-PPI-Anzeige (126) zugeordnet sind.

8. System nach Anspruch 6 oder 7, bei welchem die eine oder mehreren Verarbeitungseinheiten (122) betreibbar sind, um eine Anzahl von zusätzlichen Bildpunkten (216) zu ermitteln, die dem bestimmten Radarkontakt (206) zugeordnet sind, und zwar durch Ermittlung, dass die Quantität des einen oder der mehreren Bildpunkte (214), die den bestimmten Radarkontakten (206) zugeordnet sind, geringer als eine Schwellwertquantität der Bildpunkte (214) ist, wobei die Zahl der zusätzlichen Bildpunkte (215) eine Quantität bildet, die bei Hinzufügung zur Quantität des einen oder der mehreren Bildpunkte (214), die dem bestimmten Radarkontakt (206) zugeordnet sind, gleich oder größer als die Schwellwertquantität ist.

9. System nach einem der Ansprüche 6 bis 8, bei welchem die Schwellwertquantität der Bildpunkte (214) gleich vier ist.

10. System nach einem der Ansprüche 6 bis 9, bei welchem die eine oder mehreren Verarbeitungseinheiten betreibbar sind, um eine Anzahl von zusätzlichen Bildpunkten (216) zu ermitteln, die dem bestimmten Radarkontakt (206a) zugeordnet sind, und zwar durch

Ermittlung einer Distanz (208a) vom Zentrum der Radar-PPI-Anzeige (126), die dem bestimmten Radarkontakt (206) zugeordnet ist, auf der Grundlage mindestens eines Teils der Ortsinformation, die dem bestimmten Radarkontakt (206) zugeordnet ist;

Ermittlung, dass die Distanz (208a) vom Zentrum der Radar-PPI-Anzeige (126), die dem bestimmten Radarkontakt (206a) zugeordnet ist, kleiner als eine Schwellwertdistanz ist; und

Zuordnung einer bestimmten Anzahl von zusätzlichen Bildpunkten (216a) zum bestimmten Radarkontakt (206a) auf der Grundlage der Ermittlung, dass die Distanz (208a) vom Zentrum der Radar-PPI-Anzeige (126), die dem bestimmten Radarkontakt (206a) zugeordnet ist, kleiner als die Schwellwertdistanz ist.

11. Software zur Erweiterung einer Radarkontaktgröße auf einer Radar-PPI-Anzeige, wobei die Software in einem computerlesbaren Medium eingebettet und zur Ausführung eines Verfahrens nach mindestens einem der Ansprüche 1 bis 5 vorgesehen ist.

## Revendications

1. Procédé d'augmentation de taille de contact radar sur écran radar panoramique (PPI), comprenant les étapes de :

réception d'un signal radar (132, 134) comprenant un ou plusieurs contacts radars, chacun des un ou plusieurs contacts radars ayant des informations de localisation associées ;

détermination, d'après au moins une partie des informations de localisation associées à chacun des un ou plusieurs contacts radars, d'un ou plusieurs pixels (214) associés à chacun des un ou plusieurs contacts radars, les un ou plusieurs pixels (214) associés à chacun des un ou plusieurs contacts radars étant un ou plusieurs d'une pluralité de pixels (214) d'un écran radar PPI (126) ;

**caractérisé par**

la détermination du fait qu'un contact radar particulier (206) des un ou plusieurs contacts radars est traçable, en déterminant qu'un contact radar traçable correspond au même objet qu'un ou plusieurs contacts radars traçables reçus auparavant, dans lequel les un ou plusieurs contacts radars traçables sont un ou plusieurs des un ou plusieurs contacts radars du signal radar ayant des informations de localisation associées indiquant des contacts avec une réflexion forte à partir d'une petite surface sous forme d'un petit contenu spatial associé à des retours d'énergie suffisamment élevés ;

la détermination d'un nombre de pixels supplémentaires (216) associés au contact radar particulier (206) ; et l'illumination des un ou plusieurs pixels (214) associés au contact radar particulier (206) et du nombre de pixels supplémentaires (216) associés au contact radar particulier (206) sur l'écran radar de PPI (126).

2. Procédé selon la revendication 1, dans lequel :

les informations de localisation associées à chaque contact radar associé des un ou plusieurs contacts radars (206) comprennent une localisation en coordonnées polaires associée au contact radar (206) ; et
la détermination d'un ou plusieurs pixels (214) associés à chacun des un ou plusieurs contacts radars (206) comprend la conversion de la localisation en coordonnées polaires associée à chacun des un ou plusieurs contacts radars (206) en une ou plusieurs localisations en coordonnées cartésiennes associées à un ou plusieurs pixels (214) de l'écran radar de PPI (126).

3. Procédé selon l'une quelconque des revendications précédentes, dans lequel l'étape de détermination d'un nombre de pixels supplémentaires (216) associés au contact particulier (206) comprend la détermination du fait que la quantité des un ou plusieurs pixels (214) associés aux contacts radars particuliers (206) est inférieure à une quantité seuil de pixels (214), le nombre de pixels supplémentaires (216) étant une quantité qui, lorsqu'elle est ajoutée à la quantité des un ou plusieurs pixels (214) associés au contact radar particulier (206), est supérieure ou égale à la quantité seuil.

4. Procédé selon l'une quelconque des revendications précédentes, dans lequel la quantité seuil de pixels (214) est égale à quatre.

5. Procédé selon l'une quelconque des revendications précédentes, dans lequel l'étape de détermination d'un nombre de pixels supplémentaires (216) associés au contact particulier (206a) comprend :

la détermination, sur la base d' au moins une partie des informations de localisation associées au contact radar particulier (206a), d'une distance (208a) à partir du centre de l'écran radar de PPI (126) associé au contact radar particulier (206a) ;
la détermination du fait que la distance (208a) à partir du centre de l'écran radar PPI (126) associé au contact radar particulier (206a) est inférieure à une distance seuil ; et
l'association d'un nombre particulier de pixels supplémentaires (216a) au contact radar particulier (206a) sur la base de la détermination du fait que la distance (208a) à partir du centre de l'écran radar PPI (126) associé au contact radar particulier (206a) est inférieure à la distance seuil.

6. Système d'augmentation de taille de contact radar sur un écran radar PPI, comprenant :

une ou plusieurs unités de traitement (118, 120, 122, 124) opérationnelles pour :

recevoir un signal radar (132, 134) comprenant un ou plusieurs contacts radars, chacun des un ou plusieurs contacts radars ayant des informations de localisation associées ;
déterminer, sur la base d' au moins une partie des informations de localisation associées à chacun des un ou plusieurs contacts radars, un ou plusieurs pixels (214) associés à chacun des un ou plusieurs contacts radars, les un ou plusieurs pixels (214) associés à chacun des un ou plusieurs contacts radars étant un ou plusieurs d'une pluralité de pixels (214) d'un écran radar PPI (126) ;
**caractérisé en ce qu'**elles sont en outre opérationnelles pour :

déterminer qu'un contact radar particulier (206) des un ou plusieurs contacts radars (206) est traçable, en déterminant qu'un contact radar traçable correspond au même objet qu'un ou plusieurs contacts radars traçables reçus précédemment, dans lequel les un ou plusieurs contacts radars traçables sont un ou plusieurs des un ou plusieurs contacts radars du signal radar ayant des informations de localisation associées indiquant des contacts avec une réflexion forte à partir d'une petite surface sous forme d'un petit contenu spatial associé à des retours d'énergie suffisamment élevés ;
déterminer un nombre de pixels supplémentaires (216) associés au contact radar particulier (206) ; et
illuminer les un ou plusieurs pixels (214) associés au contact radar particulier (206) et le nombre de pixels supplémentaires (216) associés au contact radar particulier (206) sur l'écran radar PPI (126).

7. Système selon la revendication 6, dans lequel :

les informations de localisation associées à chaque contact radar associé des un ou plusieurs contacts radars (206) comprennent une localisation en coordonnées polaires associée au contact radar (206) ; et
dans lequel les une ou plusieurs unités de traitement (118) sont opérationnelles pour déterminer un ou plusieurs pixels (214) associés à chacun des un ou plusieurs contacts radars (206) en convertissant la localisation en coordonnées polaires associée à chacun des un ou plusieurs contacts radars (206) en une ou plusieurs localisations en coordonnées cartésiennes associées à un ou plusieurs pixels (214) de l'écran radar PPI.

**8.** Système selon la revendication 6 ou 7, dans lequel les une ou plusieurs unités de traitement (122) sont opérationnelles pour déterminer un nombre de pixels supplémentaires (216) associés au contact particulier (206) en déterminant que la quantité des un ou plusieurs pixels (214) associés aux contacts radars particuliers est inférieure à une quantité seuil de pixels (214), le nombre de pixels supplémentaires (216) étant une quantité qui, lorsqu'elle est ajoutée à la quantité des un ou plusieurs pixels (214) associés au contact radar particulier (206), est supérieure ou égale à la quantité seuil.

**9.** Système selon l'une quelconque des revendications 6 à 8, dans lequel la quantité seuil de pixels (214) est égale à quatre.

**10.** Système selon l'une quelconque des revendications 6 à 9, dans lequel les une ou plusieurs unités de traitement sont opérationnelles pour déterminer un nombre de pixels supplémentaires (216a) associés au contact particulier (206a) par :

la détermination, sur la base d'au moins une partie des informations de localisation associées au contact radar particulier (206), d'une distance (208a) à partir du centre de l'afficheur radar de PPI (126) associé au contact radar particulier (206) ;
la détermination du fait que la distance (208a) à partir du centre de l'écran radar PPI (126) associé au contact radar particulier (206a) est inférieure à une distance seuil ; et
l'association d'un nombre particulier de pixels supplémentaires (216a) au contact radar particulier (206a) sur la base de la détermination du fait que la distance (208a) à partir du centre de l'écran radar PPI (126) associé au contact radar particulier (206a) est inférieure à la distance seuil.

**11.** Logiciel d'augmentation de taille de contact radar sur un écran radar PPI, le logiciel étant intégré dans un support lisible par ordinateur et lorsqu'il est exécuté, opérationnel pour réaliser un procédé selon au moins l'une quelconque des revendications 1 à 5.

EP 2 430 471 B1

106

PPI DISPLAY PROCESSING APPLICATION
118

COORDINATE CONVERSION ALGORITHM
128

FALSE ALARM/ CLUTTER REDUCTION ALGORITHM
130

TRACKABLE CONTACT EXTRACTION APPLICATION
120

TRACKING APPLICATION
124

CONTACT SIZE AUGMENTATION APPLICATION
·122

RADAR PPI DISPLAY
126

102

132

CONVERTER
104

134

NETWORK
108

134

112

110

136

138

134

114 — P    M — 116

*FIG. 1*

FIG. 2A

FIG. 2B

FIG. 2C

*FIG. 2D*

300 — START

302 — RECEIVE A RADAR SIGNAL COMPRISING ONE OR MORE RADAR CONTACTS

304 — DETERMINE ONE OR MORE PIXELS ASSOCIATED WITH EACH OF THE ONE OR MORE RADAR CONTACTS

306 — ELIMINATE ONE OR MORE RADAR CONTACTS FROM RADAR SIGNAL THROUGH FALSE ALARM/CLUTTER REDUCTION

308 — DETERMINE THAT A PARTICULAR RADAR CONTACT OF THE ONE OR MORE RADAR CONTACTS IS TRACKABLE

310 — DETERMINE A NUMBER OF ADDITIONAL PIXELS WITH THE PARTICULAR RADAR CONTACT

312 — ILLUMINATE THE ONE OR MORE PIXELS ASSOCIATED WITH THE PARTICULAR RADAR CONTACT AND THE NUMBER OF ADDITIONAL PIXELS ASSOCIATED WITH THE PARTICULAR RADAR CONTACT ON A RADAR PPI DISPLAY

314 — PROCESS COMPLETE?  NO

YES

316 — END

*FIG. 3*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2423657 A